# EUROPEAN PATENT APPLICATION

(11) **EP 1 326 438 A2**
(43) Date of publication of application: **09.07.2003**
(21) Application number: 02258729.9
(22) Date of filing: 18.12.2002
(51) Int. Cl.: H04N 5/45

(54) **Television system**

(30) Priority: 20.12.2001 GB 0130412
(71) Applicant: Pace Micro Technology PLC, Saltaire, Shipley, BD18 3LF (GB)
(72) Inventor: Smith, Lyndon, Saltaire, Shipley BD18 3LF (GB)
(74) Representative: Wood, Graham

(57) **Abstract**

The invention provides a television system for receiving data broadcast to a number of broadcast data receivers at different locations. The broadcast data receivers generate video and audio from the received data to represent television programmes selectable by a user. The invention provides for the transmission of portions of data in addition to the data for the programmes available at that instant. The portions of data allow the generation of video and/or audio "trailers" which represent a programme or service available for user selection and viewing in the future. The user can select the programme or service via the broadcast data received at the time of display of the video or audio trailer generated from the portion of data.

## Description

The invention to which this application relates is to the provision of a television system and in particular, details relating to television programmes generated through said system to the user.

Television systems can take many different forms but increasingly, the common form is to provide a broadcast data receiver for the reception of digital data, with the digital data being broadcast from one or a number of broadcast locations and transmitted, via satellite, cable or terrestrial transmission systems to the said receivers at a plurality of locations remote from the broadcaster. The broadcast data receivers (BDR) can be connected to television sets or display screens and speakers, or alternatively, the broadcast data receivers can be provided, integrally as a unit in which the speakers and display screen are provided.

The digital data which is transmitted to the broadcast data receiver can comprise data to allow many different functions to take place such as the generation of television programmes, the generation of electronic programme guides, the generation of internet services, home shopping services and the like. In whichever format, the data can be received by the broadcast data receiver, decoded and processed to generate the user selected function from the same.

The function to which this application is directed is to the provision of television programme information. Generally, an electronic programme guide comprises a grid displayed on screen in which programme titles are illustrated to the user with regard to time, channel location and the like. Upon user selection of a particular programme then further information can be generated relating to that programme and the user is also capable of selecting the system to generate reminders which appear on the screen when a particular selected programme is due to be viewed in the future.

Another function of electronic programme guides and associated programme information is to generate a trailer which can comprise video and/or audio, said trailer indicating excerpts from a programme which can be viewed in the future in an attempt to make the same appealing to the viewer. However, a problem with the conventional provision of a trailer (i.e. a trailer not generated by an EPG but simply broadcast in slots between programs) is that when the user views a trailer the actual time for the broadcast of the programme is either not displayed or, if it is displayed, unless the user takes a note of the same and retains the note, the user is typically not aware or forgets when the programme which is represented by the trailer is actually shown.

While it is possible to provide a reminder service in relation to normal programmes which are selected for viewing, these are of no use with regard to a video trailer as the trailer is often shown many days or weeks in advance of the actual viewing time and the electronic programme guide generally only has data for, and therefore can only indicate programmes which are available for viewing for the next 8 or 10 hours in advance. In addition, in current systems there is a need for the user to set the reminder service at the time of looking through the EPG. As a result, many programmes which may be successfully promoted to the user via the trailer are still not watched at the time of transmission as the user has forgotten about the same.

The aim of the present invention is to provide a system whereby the generation of a trailer or other portion of data for a particular programme via a television system can be followed up with a reminder service to allow the actual showing of the programme, which the user may be attracted to, to be successfully viewed. Another aim is to allow the provision of real time broadcast specific information.

In a first aspect of the invention there is provided a television system for the generation of television programmes from digital data received by a broadcast data receiver, said broadcast data receiver processing the data into television programmes comprising video and audio displayed by the television system and characterised in that a portion of said received data represents a particular programme or service available for user selection in the future and upon the generation and display of the audio and/or video from the portion to a user via the television system, the user is provided with the option to make a selection relating to the programme or service represented by the portion, said option selection received by the broadcast data receiver and an entry made into a memory means in the broadcast data receiver which is representative of the ser's option selection.

Typically, the said portion of data further includes data which identifies the programme or service and/or scheduled time of viewing of said programme or service and said data is retrieved and stored in the memory upon the user selection being made.

Typically the BDR also generates an electronic programme guide for the user from received data.

Typically the data which is transmitted as part of, or along with the portion includes data which links the trailer with the user facility to set a reminder. Thus, for example, in addition to the data to allow the portion to be generated, additional data is provided which includes the channel and time at which the programme or service represented by the portion is to be available for viewing. Thus, if the user makes the programme selection said data is stored in the memory and used to generate a reminder, typically a txt message on screen. Alternatively, if no schedule information is available at the time of screening the portion, an identification label for the future program can be transmitted along with the data for that portion instead. If a reminder is activated on this, the receiver will scan for this label every time it receives an EPG update and automatically set a reminder when the schedule information for this program does become available.

In one embodiment the user selection generates a reminder. Alternatively, or in addition, the user selection acts to book an event, such as the purchase of a pay for view sports event, movie or the like.

Although particularly suited to the circumstances where the portion is a trailer for a programme due to be transmitted at a later time, the said trailer thereby representing the programme, the invention can also be used to link portions of data in the forms of adverts, or other promotional material to certain programmes or services. For example, if the portion of data relates to a particular product which is to be shown in a programme, the user can make the selection at the time of showing the portion of data and when the linked programme is subsequently about to be shown the reminder can be generated.

Another possibility for the use of the portion of data is if the system is also connected to interactive shopping. In this case the portion of real time data is supplied as an advertisement and can provide a link to an interactive facility to buy that product. For example, if an advert shows a particular product, which is available to buy within the interactive services offered, a pop up will appear to indicate this. On selection the user will be taken straight to the interactive shopping section where they can buy this product.

Thus although reference is made to a portion of data, primarily in the form of trailer for a programme herein, the references and features of the same can be equally applied to any portion of video and/or audio display.

In an alternative embodiment, when the selection indicator is received by a broadcast data receiver, the user is presented with the ability to enter the identity of the programme by typing the appropriate letters and also the channel and time of display. Typically the information for the channel and time of display can be indicated at the time of the trailer being generated on screen.

In an alternative embodiment, upon a selection indication being received by the broadcast data receiver, the receiver identifies the programme title and channel and display time from programme information data received, and said data is stored in the memory.

With the reminder data set, at a predetermined time prior to and/or at the time of display of the selected programme, a reminder text message is displayed on screen to the user to remind them that the programme which they have previously selected is about to be available for viewing. In addition, or alternatively, the broadcast data receiver can be controlled such that when the time for display of a selected television programme arrives, the broadcast data receiver automatically tunes to the received data for the television programme and generates the same for viewing.

The invention is now described with reference to programme trailers and it should be appreciated that the invention can be applied to any portion of video and/or audio. One form is the generation of a video and audio portion in the form of an advert whereupon other programmes are linked via the portion. Alternatively, at the end of viewing a particular episode of a television programme series, the end titles of the programme can include a trailer for the next episode in the series. Furthermore, the portion can comprise purely a video image in the form perhaps of text which is displayed on a part of the screen and so on, and so it should be appreciated that the term trailer should be interpreted in its widest scope.

Thus, an important part of the invention is the transmission in the portion of data of small amounts of real time data along with the actual program data at the time of the broadcast of the trailer. This data preferably carries the future schedule information for the trailed programme, even if the scheduled viewing is in the relatively long term and therefore isn't available as part of the EPG. This allows the system to set reminders for trailed programmes possibly weeks in the future without the user needing to key in the information, provided the data is transmitted alongside the trailer. On possible method for achieving this is via the teletext subtitle carrier but this is by no means the only method.

Thus in one embodiment in order for the broadcast data receiver to identify the future transmission time of a trailed programme, or receive other data regarding a broadcast so that it is real time, digital data can be encoded into the transmission video signal. This is a very low bit rate for relatively simple information, possibly including only the name and time of the future broadcast, or other data pertaining to the current broadcast. It is envisaged that the method of achieving this would be very similar to the current methods of transmitting teletext and teletext subtitle information. Since the portion of data for the trailer may not need actual hearing impaired subtitles, this live data format could even be used to carry the data required as it would only need a few characters. The data could even be arranged to look like normal English, i.e. "Flintstones (to be shown at) 20.00 (on the) Paramount Comedy Channel", such that if teletext subtitle information was switched on this information would be seen using the standard subtitle mode. Alternatively the data could be carried as part of some of the other undisplayed video lines, such as in the VITS lines, or as extra information transmitted with the teletext service that the STB picks up. In another embodiment the information could be transferred at the start of the trailer, as a single frame of data instead of a TV picture. A suitably equipped receiver can retrieve and store this and simplynot transmit that frame. A box incapable of receiving this data would transmit this frame, but as it is only a single frame it would probably not show up on the screen. However, if implementing a new system like this, it is envisaged that all receiver units on that system would be equipped with the ability to sort out the signal before starting transmissions if such an approach was adopted.

A specific embodiment of the invention is now described with reference to the accompanying drawings, wherein:-
Figure 1 illustrates a television system in accordance with the invention displaying a trailer;
Figure 2 illustrates the user selection process; and
Figure 3 illustrates the display of a reminder message generated as a result of the user selection of Figure 2.

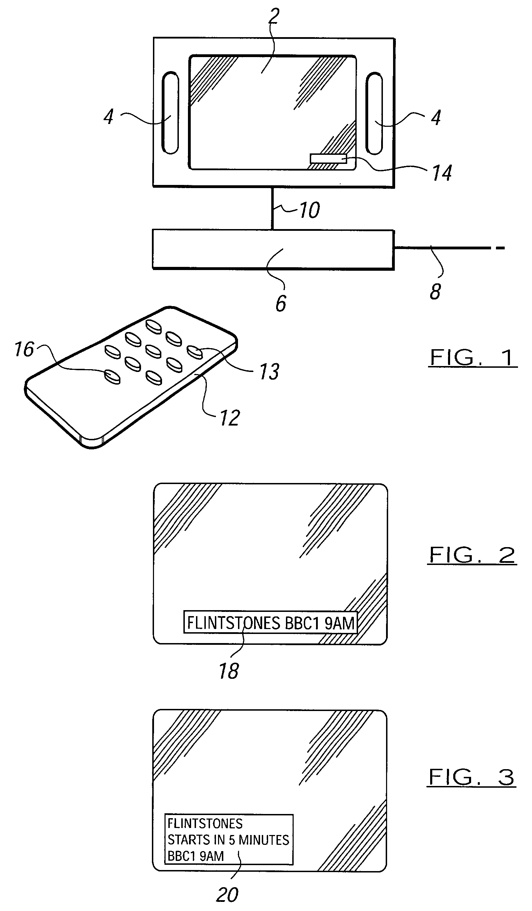

Referring firstly to Figure 1, there is illustrated a television system in accordance with the invention, said system comprising a display screen 2, speakers 4, said components typically provided as part of a television set and, connected thereto, a broadcast data receiver 6. The broadcast data receiver includes a connection 8 to allow the reception of digital data which has been broadcast from a remote location and a connection 10 to allow the processed data to be transferred from the broadcast data receiver to the television set and hence allow video, audio and auxiliary data to be generated for viewing and listening via the television set. Other communication means can also be provided at the broadcast data receiver to allow external communications for other functions which are not relevant to this particular purpose.

The apparatus is typically controlled via a remote control device 12 which can be used by the user and said remote control device can be in a conventional manner and includes a series of keys 13.

In accordance with the invention, the broadcast data receiver is capable of generating a plurality of television programmes at any one time, said programmes each carried on a particular channel which is identifiable and selectable by the user. As the proliferation of available channels increases, so the user is provided with an electronic programme guide (EPG) which is displayed on the screen 2 and which represents programmes which are available for viewing at that time and/or in the future. In addition, during the normal viewing of the television screen, portions of data such as video/audio trailers can be generated in a conventional manner to illustrate programmes which are available for viewing on other channels and/or in the future. In accordance with the invention, when displayed an on-screen display portion 14 is generated on screen 2 which indicates to the user that if they wish to select a remind function, then they depress the key 16 on their remote control device.

For the purpose of the invention, the user has depressed the key 16 on their remote control device to select to generate a reminder. By doing so, the display portion Figure 2 is generated. The display 18 of Figure 2 indicates to the user that the selection of a reminder for that particular programme has been made. In accordance with one embodiment, the user then can input into the display portion the title, channel and start time which will have been indicated on the trailer. When entered, typically via the depression of appropriate keys on the remote control, the data is then input into the broadcast data receiver memory. Alternatively, in a preferred form, and as shown, if the broadcast data receiver has received data for the television programme represented by the trailer, then the user need not type in the programme data into the display portion but rather the broadcast data receiver, upon receiving the selection indication, receives the relevant information in terms of title, channel and time and displays the same in the display portion automatically. The data is typically received as the portion of data from which the trailer is generated also includes data which indicates the scheduling information for the transmission of the full programme or service represented by the portion of data. Thus, when the user selection is made, the said data is retrieved and stored in the memory and can also be used to generate any required on screen display.

In any case, the data representing the television programme is stored in the memory in the broadcast data receiver.

As the time approaches for the generation of the selected programme, the broadcast data receiver identifies this and generates a display 20 on screen as shown in Figure 3. This therefore serves as a reminder to the user that the selected programme is available for viewing shortly and they can then select the appropriate channel to view the same. Alternatively, the broadcast data receiver can automatically tune to received data for the selected programme and generate the same on screen automatically at the appropriate time.

The present invention therefore provides an important addition to available user services in that the user can interact with the broadcast data receiver to enter reminder data even if the broadcast data receiver does not have the relevant data as the same has not yet been transmitted from the broadcaster.

## Claims

1. A television system for the generation of television programmes from digital data received by a broadcast data receiver, said broadcast data receiver processing the data into television programmes comprising video and audio displayed by the television system and **characterised in that** a portion of said received data represents a particular programme or service available for user selection in the future and upon the generation and display of the audio and/or video from the portion of data to a user via the television system, the user is provided with the option to make a selection relating to the programme or service represented by that portion, said option selection received by the broadcast data receiver and an entry made into a memory means in the broadcast data receiver which is representative of the users option selection.

2. A system according to claim 1 **characterised in that** the portion of data includes data which identifies the programme or service and the scheduled time of viewing of said programme or service and said data is retrieved and stored in the memory upon the user selection being made.

3. A system according to claim 1 wherein the broadcast data receiver can generate an electronic programme guide from the received data.

4. A system according to claim 1 **characterised in that** the data portion for the programme or service includes data which links the said portion of data with the user facility to set a reminder.

5. A system according to claim 4 **characterised in that** the portion of data includes data representing the channel and time at which the programme represented by the portion of data is to be available for viewing.

6. A system according to claim 1 **characterised in that** if no programme schedule data is available at the time of screening the portion of data for the programme or service, an identification label for the future programme or service is transmitted as part of the portion of data.

7. A system according to claim 6 **characterised in that** if upon receipt of the label the broadcast data receiver scans for data equivalent to the label every time it receives schedule data updates and when the schedule data for the label does become available, automatically sets a reminder for display to the user.

8. A system according to claim 1 **characterised in that** the portion of data for the programme or service is related to any or any combination of programme, advert, other promotional material, shopping facility.

9. A system according to claim1 **characterised in that** when the user selection indicator is received by the broadcast data receiver the user has with the ability to enter an identity by entering the appropriate title of the programme, channel and time of display.

10. A system according to claim 1 **characterised in that** upon the user selection indicator being received by the broadcast data receiver, the receiver identifies the programme title and channel and display time from the data received and said data is stored in a memory for the generation of a reminder for display to the user at, or prior to, the scheduled time.

11. A system according to claim 10 characterise in that a reminder text message is displayed on a display screen of the television system.

12. A system according to claim 1 **characterised in that** the broadcast data receiver is controlled such that when the time for display of the selected television programme arrives, the broadcast data receiver automatically tunes to the received data for the television programme and generates the same for viewing.

13. A system according to claim 1 **characterised in that** the system includes the transmission of data for programmes which are available for selection for viewing at that instant or in the relatively near future and, in addition, the transmission of data allowing the generation of a portion or portions of video and/or audio relating to programmes or services which are available for selection for viewing at some stage in the future.

14. A system according to the preceding claim **characterised in that** the additional data is carried via a teletext subtitle carrier.
